# EUROPÄISCHE PATENTANMELDUNG

(11) **EP 2 696 418 A1**
(43) Veröffentlichungstag der Anmeldung: **12.02.2014**
(21) Anmeldenummer: 12005732.8
(22) Anmeldetag: 07.08.2012
(51) Int. Cl.: H01M 8/24, H01M 8/02, C25B 9/18, F16J 15/00, F16J 15/02

(54) **Dichtungsanordnung insbesondere für Brennstoffzellen- und/oder Elektrolyseurstacks**

(71) Anmelder: Firma Carl Freudenberg, 69469 Weinheim (DE); Theodor Gräbener GmbH & Co. KG, 57250 Nethphen-Werthenbach (DE)
(72) Erfinder: Anders, Britta, 69509 Mörlenbach (DE); Geiß, Stefan, Dr., 69514 Laudenbach (DE); Zabold, Jochen, 69488 Birkenau (DE); Edelmann, Achim, 57234 Wilnsdorf, OT Wilden (DE); Fritz, Werner, Dr., 76297 Stutensee (DE); Köhler, Alexander, 35713 Eschenburg (DE)

(57) **Zusammenfassung**

Dichtungsanordnung (1), insbesondere für einen Brennstoffzellen- und/oder Elektrolyseurstack, umfassend eine Platte (2), die mindestens eine stufenförmige Sicke (3) aufweist, wobei die Sicke (3) mindestens eine innerhalb der Sicke (3) liegende Gegensicke (4) mit einem Gegensickengrund (5) und mindestens einer Gegensickenflanke (6) aufweist, wobei auf dem Gegensickengrund (5) zumindest ein profiliertes Dichtelement (7) mit mindestens einer Dichtlippe (10) so positioniert ist, dass die Projektion des Scheftelpunktes (8) der Dichtlippe (10), senkrecht auf den Gegensickengrund (5) nicht auf oder nicht unmittelbar benachbart zu der Mitte (9) des Gegensickengrunds (5) liegt, wobei die Dichtlippe (10) im Scheitelpunkt (8) einen Krümmungsradius (11) im unverpressten Zustand von weniger als 1 mm, vorzugsweise von 0,05 mm bis 0,5 mm, noch vorzugsweise 0,1 bis 0,5 mm , insbesondere von 0,15 mm bis 0,4 mm aufweist.

## Beschreibung

### Technisches Gebiet

Die Erfindung betrifft eine Dichtungsanordnung, insbesondere für Brennstoffzellen- und / oder Elektrolyseurstacks umfassend eine Platte, die eine stufenförmige Sicke aufweist.

### Stand der Technik

Dichtungsanordnungen der eingangs genannten Art sind grundsätzlich bekannt und eignen sich insbesondere zum Einsatz in Brennstoffzellen- und / oder Elektrolyseurstacks. Brennstoffzellen- und Elektrolyseurstacks bestehen aus einer Aneinanderreihung von einzelnen Zellen. Diese bilden einen so genannten Stack oder Zellstapel, in den häufig noch zusätzliche Komponenten zur Kühlung integriert werden. Ein Stack kann dabei aus bis zu 500 einzelnen Zellen bestehen. Eine Zelle zeichnet sich durch einen schichtweisen Aufbau aus, wobei in der Regel eine Zelle aus einer Anordnung besteht, gebildet durch zwei Bipolarplatten mit Gasvertellerstruktur, zwei Gasdiffusionsschichten (GDL)

(Anoden- und Kathoden-GDL), Anoden- und Kathodenkatalysator sowie eine protonenleitende und gasdichte Membran. Die Anoden- und Kathoden-GDL, Anoden- und Kathodenkatalysator und Membran bilden eine sogenannte Membran-Elektroden-Anordnung (MEA).

Zur Vermeidung von Leckagen insbesondere aus dem Anoden- oder Kathodenraum und/oder zur Vermeidung eines Gasübertritts zwischen Anoden- und Kathodenraum werden Dichtungen eingesetzt. Eine übliche Vorgehensweise ist, dass die Abdichtung zwischen Bipolarplatte und MEA erfolgt. Dabei kann die Dichtung sowohl als lose, eigenständige Komponente oder auch als bereits integrierte Komponente auf einen der beiden oder beiden Dichtpartnern (Bipolarplatte, MEA) eingebracht werden.

Neben graphitischen Bipolarplatten werden zunehmend metallische Bipolarplatten aus Gründen der besseren Bauraumausnutzung sowie eines Kostenreduktionspotentials eingesetzt. Im Falle einer metallischen Bipolarplatte gibt es Bestrebungen, eine Sicke als Abdichtung von Anoden- und Kathodenraum zu nutzen, da Sicken prinzipiell gute Voraussetzungen zur Integration von Gasführungen bieten. Es hat sich jedoch gezeigt, dass die herkömmlichen Sickenanordnungen ihre Dichtungsaufgabe insbesondere im Hinblick auf eine geforderte hohe Toleranzaufnahme nicht erfüllen, da das elastische Verhalten nicht ausreichend ist.

Um das elastische Verhalten zu verbessern, wird die Sicke oftmals mit einer elastomeren Schicht versehen. Um die Stabilität der Sicke zu erhöhen werden auch profilierte Sicken hergestellt, die beispielsweise mit einer Gegensicke versehen wurden. Die heutzutage realisierten Designs der elastomeren Schicht haben den Nachteil, dass trotz der Sickenprofilierung die Wechselwirkungskraft zwischen elastomerem Dichtungsanteil und Sicke im verpressten Zustand des Zellstapels (Reaktionskraft) oftmals so hoch ist, dass sie zu einer Schädigung der Dichtungsanordnung führen.

### Darstellung der Erfindung

Der Erfindung liegt die Aufgabe zugrunde, eine Dichtungsanordnung der eingangs genannten Art bereitzustellen, die verbesserte mechanische Eigenschaften aufweist. Insbesondere soll die Dichtungsanordnung so ausgelegt sein, dass die Reaktionskräfte zwischen Dichtungselement und Sicke so gering sind, dass eine Schädigung der Sicke und/oder der angrenzenden Bauteile vermieden wird. Darüber hinaus soll die Dichtungsanordnung über einen breiten Verpressbereich kontrollierte Kraftverläufe zeigen und einen großen Toleranzausgleich bereitstellen.

Diese Aufgabe wird erfindungsgemäß gelöst durch eine Dichtungsanordnung, insbesondere für einen Brennstoffzellen- und/oder Elektrolyseurstack, umfassend eine Platte, die mindestens eine stufenförmige Sicke aufweist, wobei die Sicke mindestens eine innerhalb der Sicke liegende Gegensicke mit einem Gegensickengrund und mindestens einer Gegensickenflanke aufweist, wobei auf dem Gegensickengrund zumindest ein profiliertes Dichtelement mit mindestens einer Dichtlippe so positioniert ist, dass die Projektion des Scheitelpunktes der Dichtlippe, senkrecht auf den Gegensickengrund nicht auf oder nicht unmittelbar benachbart zu der Gegensickenmitte liegt und die Dichtlippe im Scheitelpunkt einen Krümmungsradius im unverpressten Zustand von weniger als 1 mm, vorzugsweise von 0,05 mm bis 0,5 mm, noch vorzugsweise 0,1 bis 0,5 mm , insbesondere von 0,15 mm bis 0,4 mm aufweist.

Auf vorteilhafte Ausgestaltungen nehmen die Unteransprüche Bezug.

Der Begriff "stufenförmige Sicke" wird im herkömmlichen Sinne verstanden. Insbesondere ist eine Sicke eine Profilierung von Blechen, vorzugsweise mit einer Dicke kleiner 0,2 mm, zum Zwecke der Erhöhung der Steifigkeit im Bereich der Profilierung. Je nach Grad der gewünschten Versteifung in Kombination mit der notwendigen Elastizität kann die Sicke ein- oder mehrstufig ausgeführt werden. Unter stufenförmig wird erfindungsgemäß verstanden, dass eine oder mehrere Stufen vorhanden sind. Die Stufe kann dabei beispielsweise trapezförmig, oder rechteckig ausgebildet sein.

Unter dem Begriff "Gegensicke" wird erfindungsgemäß Folgendes verstanden: Eine Gegensicke ist eine Profilierung der Sicke, welche innerhalb der Sicke in Gegenrichtung zur Sicke ausgeführt wird und einen Gegensickengrund sowie mindestens eine Gegensickenflanke aufweist Diese Gegensicke dient zur weiteren Erhöhung der Steifigkeit der Sicke. Weiterhin kann sie auch zur Anpassung der Elastizität in Kombination mit dem aufgebrachten, profilierten Dichtelement dienen. Zweckmäßigerweise wird die geometrische Ausführung der Gegensicke zur Aufnahme des profilierten Dichtelementes entsprechend dem gesamten Kraftverlauf in der Verspannung des Brennstoffzellen- und Elektrolyseurstacks ausgelegt. Diese ist Bestandteil der federelastischen Kennlinie der Dichtungsanordnung.

Der Begriff "profiliertes Dichtelement" wird im herkömmlichen Sinne verstanden. Insbesondere ist ein "profiliertes Dichtelement" ein Dichtelement, dass im Gegensatz zur Flachdichtung eine oder mehrere, vorzugsweise zwei Dichtlippen aufweist.

Der Begriff "Dichtlippe" wird erfindungsgemäß im herkömmlichen Sinne verstanden. Insbesondere zeichnet sich eine Dichtlippe durch mindestens eine lokale vollmassige Erhöhung aus. Der Dichtlippe sind mindestens ein Scheitelpunkt, mindestens eine Flanke, sowie ein Krümmungsradius und ein Öffnungswinkel zugeordnet. Dichtlippen können hinsichtlich Dichtfunktion und nötiger Verpresskraft besonders gut ausgelegt werden.

Der Begriff "Krümmungsradius" wird im herkömmlichen Sinne verstanden. Insbesondere ist der Krümmungsradius der Radius des Kreises oder Kreissegments, der die Kontur des Dichtelements um den Scheitelpunkt bestmöglich wiedergibt. Der Krümmungsradius kann optisch vermessen werden.

Vorzugsweise ist das Dichtelement so ausgestaltet, dass es den zu dichtenden Bereich zumindest teilweise umläuft.

Zur Lösung der Aufgabe wird erfindungsgemäß der Krümmungsradius der Dichtlippe um den Scheitelpunkt im unverpressten Zustand so eingestellt, dass er weniger als 1 mm, vorzugsweise von 0,05 mm bis 0,5 mm, vorzugsweise 0,1 bis 0,5 mm, insbesondere von 0,15 mm bis 0,4 mm beträgt. Das erfindungsgemäße Dichtelement weist folglich eine sehr filigrane Struktur auf.

Überraschend wurde gefunden, dass die erfindungsgemäße Dichtungsanordnung hervorragende mechanische Eigenschaften aufweist. Die Dichtungsanordnung ist so ausgelegt, dass die Reaktionskräfte zwischen Dichtungselement und Sicke so gering sind, dass eine Schädigung der Sicke und/oder der angrenzenden Bauteile zuverlässig vermieden werden kann. Darüber hinaus zeigt die Dichtungsanordnung über einen breiten Verpressbereich kontrollierte Kraftvertäufe und einen großen Toleranzausgleich.

Die Kombination der sehr filigran strukturierten Dichtlippe in Verbindung mit der wie oben definierten spezifischen Anordnung des Dichtelements innerhalb einer Sicke ermöglicht eine besonders definierte Kraftbeaufschlagung. Insbesondere kann hierdurch die Reaktionskraft auf die Sicke so gering gehalten werden, dass die dichtende Wirkung auch bei hoher Belastung erhalten bleibt und der Bereich unterhalb der Sicke für einen Medientransport verwendet werden kann.

Die erfindungsgemäße Dichtungsanordnung eignet sich hervorragend zum Abdichten von Öffnungen, wobei unter Öffnungen erfindungsgemäß ein praktisch beliebiger abzudichtender Bereich verstanden wird. In Bezug auf eine Brennstoffzelle kann eine Öffnung z. B. eine Durchgangsöffnung für ein Reaktionsgas oder ein Kühlmittel sein. Es kann aber z. B. auch der elektrochemisch aktive Bereich sein, in dem z. B. die Gasdiffusionslage angeordnet ist oder Verschraubungslöcher vorgesehen sind. Die erfindungsgemäße Sicke erlaubt in einem weiten Toleranzbereich Herstellungstoleranzen von z. B. Gasdiffusionslagen auszugleichen und trotzdem eine hervorragende Dichtwirkung bereitzustellen.

Die erfindungsgemäße Kombination einer stufenförmigen Sicke in Verbindung mit der integrierten Gegensicke erlaubt eine Erhöhung der Stabilität der Dichtungsanordnung. Die Sicke ist hierbei stufenförmig in einer Platte ausgebildet.

Die Sicke könnte als elastische Struktur ausgebildet sein. Dabei ist denkbar, die Platte, in welcher die Sicke ausgebildet ist, aus einem Material zu fertigen, welches besondere elastische Eigenschaften aufweist. Diese Maßnahmen stellen sicher, dass die Sicke bei Druckbeaufschlagung zwischen zwei flächigen Elementen definiert deformiert werden kann.

Eine weitere vorteilhafte Ausführungsform der Erfindung sieht vor, dass die Sicke eine Vollsicke oder eine Halbsicke enthält. Hierbei ist es innerhalb einer Sicke auch möglich, beide Formen vorzusehen, da sich je nach Verlauf der Sicke in der Ebene andere Elastizitäten als sinnvoll erweisen können, z. B. dass in engen Radien eine andere Sickengeometrie sinnvoll ist als bei geraden Verläufen der Sicke.

In Bezug auf die spezifische Anordnung der Sicke bietet es sich insbesondere an, dass die Sicke an der Platte angebracht ist. Hierbei gibt es zum einen die Möglichkeit, dass die Platte insgesamt als Formteil, beispielsweise Metallformteil ausgeführt ist (welches zur Korrosionsbeständigkeit unter Umständen bereichsweise mit einer Beschichtung versehen ist). Es ist jedoch auch möglich, dass die Platte als Verbundelement zweier Platten, beispielsweise Metallplatten, mit einer dazwischen liegenden Platte aus einem anderen Material, beispielsweise einer Kunststoffplatte, ausgeführt ist.

Auch denkbar ist, dass die Sicke auf einem von der Platte separaten Bauteil angeordnet ist. Dies ist besonders dann günstig, wenn die Platten aus für Sicken ungeeignetem Material wie Graphit bestehen. Das separate Bauteil wird auf die Platte dann aufgelegt oder durch Kleben, Einklicken, Einschweißen, Einlöten oder Umspritzen integriert, so dass sich insgesamt eine dichtende Verbindung zwischen dem separaten Bauteil und der Platte ergibt. Erfindungsgemäß bevorzugt sind jedoch die Platte und die Sicke einstückig ausgebildet. Dies ist fertigungstechnisch einfach zu realisieren und führt zu einer Anordnung mit einer hohen Stabilität.

Gemäß einer bevorzugten Ausführungsform der Erfindung weist die Dichtungsanordnung innerhalb des Sickengrunds eine oder mehrere profilierte Dichtelemente auf, die insbesondere Dichtlippen aufweisen. Durch das Vorsehen von Dichtlippen kann die Dichtfunktion über den erforderlichen Toleranzbereich bei gleichzeitig geringen Reaktionskräften zwischen Dichtungselement und Sicke so gestaltet werden, dass eine Schädigung der Sicke und/oder der angrenzenden Bauteile zuverlässig vermieden werden kann.

Gemäß einer bevorzugten Ausführungsform der Erfindung ist die Kennlinie der als elastische Struktur ausgestalteten Sicke auf die Kennlinie der Gesamtverpressung des Stacks dahingehend abgestimmt ist, dass die Deformation der Sicke unterhalb 25% liegt, vorzugsweise zwischen 15-22%.

Gemäß einer bevorzugten Ausführungsform der Erfindung weist das Dichtelement zwei Dichtlippen auf, von denen mindestens eine, vorzugsweise beide benachbart zu den Gegensickenflanken angeordnet sind.

Um eine gute Dichtwirkung zu erzielen ist das profilierte Dichtelement vorzugsweise verliersicher auf dem Gegensickengrund angeordnet. Hierzu kann das Dichtefement beispielsweise mit dem Gegensickengrund verklebt werden. Erfindungsgemäß bevorzugt wird jedoch die Verliersicherheit des Dichtelements dadurch erzielt, dass die Herstellung und verliersichere Positionierung des Dichtelements in einem Schritt, vorzugsweise mittels eines Form gebenden Verfahrens, insbesondere Spritzgießen oder Verpressen durchgeführt wird.

Das Dichtelement ist vorzugsweise als Formteil, insbesondere als Spritzgußteil oder Pressteil ausgeführt.

Das Dichtelement kann aus einem elastomeren Material bestehen. Vorzugsweise enthält das Dichtelement Silikon, FKM, EPDM, PIB, TPE oder Mischungen hieraus.

Die Platte und/oder die Sicke können aus den verschiedensten Werkstoffen, beispielsweise aus Metallen wie insbesondere Stahl, Nickel, Titan oder Aluminium und/oder Kunststoffen bestehen.

Gemäß einer bevorzugten Ausführungsform der Erfindung ist die Platte als Bipolarplatte ausgebildet. Bipolarplatten zeichnen sich insbesondere durch Öffnungen zur Kühlung bzw. Medien zu- und -abfuhr von den Bipolarplatten zu den eigentlichen Brennstoffzellen auf, wobei unter Öffnungen hierbei in der vorliegenden Anmeldung, wie oben beschrieben, ein praktisch beliebiger abzudichtender Bereich verstanden wird.

Zweckmäßigerweise ist die Bipolarplatte derart ausgebildet, dass sie eine oder mehrere der folgenden Aufgaben in einem Brennstoffzellensystem erfüllen kann:
- Elektrische Kontaktierung der Elektroden der Brennstoffzellen und Weiterleitung des Stroms zur benachbarten Zelle (Serienschaltung der Zellen),
- Versorgung der Zellen mit Reaktionsgasen und z. B. Abtransport des erzeugten Reaktionswassers über eine entsprechende Kanalstruktur,
- Weiterleiten der bei der Reaktion in der Brennstoffzelle entstehenden Abwärme, sowie
- Abdichten der verschiedenen Gas- bzw. Kühlkanäle gegeneinander und nach außen.

Die erfindungsgemäße Dichtungsanordnung zeichnet sich auch dadurch aus, dass das Dichtelement bei einer Verpressung von 30 % eine Reaktionskraft auf die Sicke von weniger als 5 N/mm, vorzugsweise von 0,1 N/mm - 4 N/mm, insbesondere von 0,5 N/mm - 3 N/mm ausüben kann. Die Kombination aus stufenförmiger Sicke mit integrierter Gegensicke stellt dafür mit ihrer abgestimmten, federelastischen Kennlinie der Dichtung den erforderlichen Kompressionsraum zur Verfügung.

Ein weiterer Gegenstand der vorliegenden Erfindung ist ein Modul für eine Brennstoffzelle, umfassend zwei der oben beschriebenen erfindungsgemäßen Dichtungsanordnungen, wobei die Platten über die den Sickenausnehmungen abgewandten Plattenseiten miteinander verbunden werden. In dem erfindungsgemäßen ersten Modul definieren die Sicken einen Hohlraum und die auf den Sicken angeordneten Dichtelemente zeigen nach außen.

Bei derartigen Modulen ist vorteilhaft, dass die Anzahl der für den Zusammenbau einer Brennstoffzellenanordnung benötigten Einzelzeile reduziert wird und dass der Zusammenbau mit einer geringeren Anzahl von Arbeitsschritten möglich ist.

Ein weiterer Gegenstand der vorliegenden Erfindung ist ein zweites Modul für eine Brennstoffzelle umfassend stapelförmig angeordnete Bipolarplatten, wobei zwischen den Platten zumindest ein wie oben beschriebenes Dichtelement angeordnet ist. Vorteilhafterweise ist das Dichtelement in dieser Anordnung benachbart zu einer Membr-an-Elektroden-Anordnung montiert. Diese umfasst eine Membran, die beidseitig mit einer Gasdiffusionslage bedeckt ist. Die Membran-Elektroden-Anordnung ist wiederum zwischen zwei Bipolarplatten angeordnet.

Das Dichtelement kann wie oben beschrieben als separates Dichtelement ausgebildet und zur Montage auf den Bipolarplatten angeordnet werden. Die Herstellung des Dichtelements wird vorteilhafterweise durch ein formgebendes Verfahren, insbesondere Spritzgießen oder Pressen, durchgeführt. Durch Auslegung von Dichtmaterial und Dichtungsgeometrie ergibt sich nach dem Aufbau des Brennstoffzellen- und/oder Etektrolyseurstacks eine definierte Verpressung der Dichtung, wodurch die Dichtwirkung sicher gestellt ist und Leckagen unterbunden werden. Erfindungsgemäß bevorzugt wird jedoch die Herstellung und Positionierung des Dichtelements in einem Schritt, vorzugsweise mittels eines Form gebenden Verfahrens, insbesondere Spritzgießen oder Verpressen durchgeführt.

Die erfindungsgemäße Dichtungsanordnung kann erfindungsgemäß hergestellt werden durch ein Verfahren umfassend folgende Schritte:
- Bereitstellung der folgenden Komponenten:
   a) mindestens eine Platte, die mindestens eine stufenförmige Sicke aufweist, wobei die Sicke mindestens eine innerhalb der Sicke liegende Gegensicke mit einem Gegensickengrund und mindestens einer Gegensickenflanke aufweist;
   b) mindestens ein profiliertes Dichtelement, das als Dichtlippe ausgeformt ist und im Scheitelpunkt einen Krümmungsradius im unverpressten Zustand von weniger als 1 mm, vorzugsweise von 0,05 mm bis 0,5 mm, noch vorzugsweise 0,1 bis 0,5 mm , insbesondere von 0,15 mm bis 0,4 mm aufweist;
- Zusammenfügung der vorgenannten Komponenten unter Positionierung des Dichtelements auf der Platte, so dass die Projektion des Scheitelpunktes des Dichtelements, senkrecht auf den Gegensickengrund nicht auf oder nicht unmittelbar benachbart zu der Mitte des Gegensickengrunds liegt.

Vorteilhafterweise erfolgt die Bereitstellung des Dichtelements und das Zusammenfügen mit der Platte simultan, vorzugsweise mittels eines Form gebenden Verfahrens, insbesondere Spritzgießen oder Compression Moulding.

### Kurzbeschreibung der Zeichnung

Einige Ausführungsbeispiele der erfindungsgemäßen Dichtelement werden nachfolgend anhand der Figuren näher erläutert. Diese zeigen, jeweils schematisch:
- Figur 1:: Den schematischen Querschnitt einer stufenförmige Sicke 3
- Figur 2:: Den schematischen Querschnitt einer stufenförmige Sicke 3 mit Gegensicke 4
- Figur 3:: Den schematischen Querschnitt einer erfindungsgemäßen Dichtungsanordnung 1
- Figur 4:: Den schematischen Querschnitt einer Dichtlippe 10

### Ausführung der Erfindung

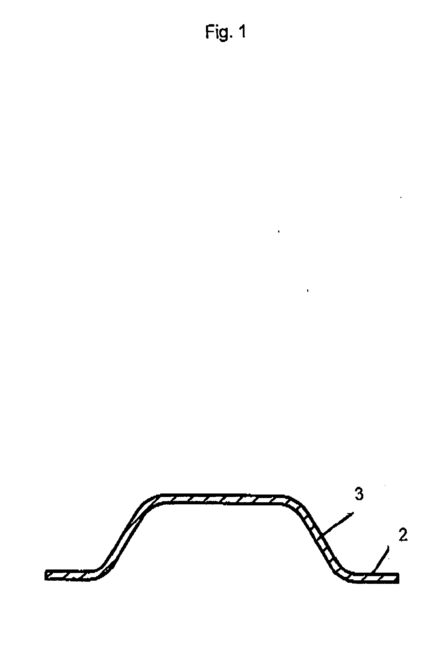

Figur 1 zeigt den schematischen Querschnitt einer stufenförmigen Sicke 3, die mit einer Platte 2 einstückig ausgestaltet ist.

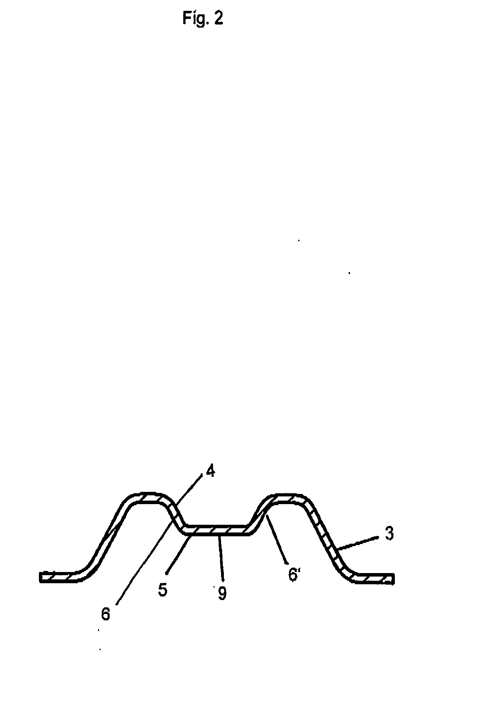

Figur 2 zeigt den schematischen Querschnitt einer stufenförmigen Sicke 3 mit einer Gegensicke 4. Die Gegensicke 4 weist einen Gegensickengrund 5 und zwei Gegensickenflanken 6 auf. Der Gegensickengrund 5 weist eine Mitte 9 auf.

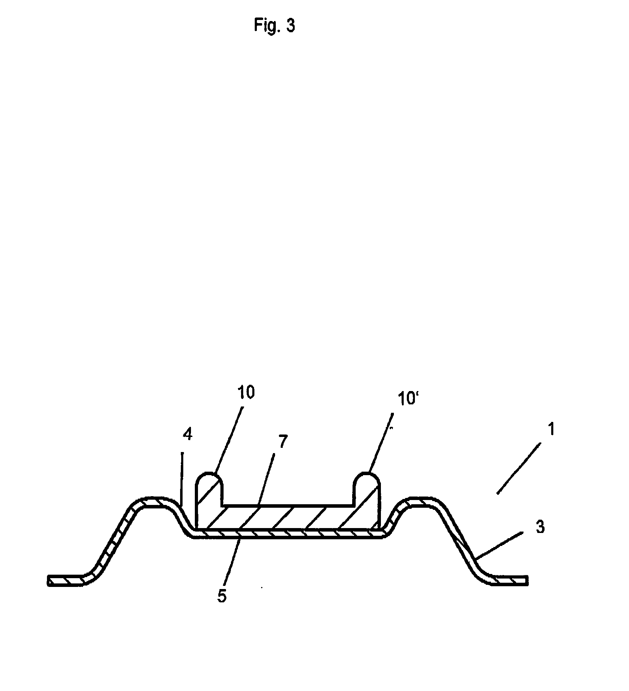

Figur 3 zeigt den Querschnitt einer erfindungsgemäßen Dichtungsanordnung 1 mit einer stufenförmigen Sicke 3 mit Gegensicke 4 und einem auf dem Gegensickengrund 5 angeordneten Dichtelement 7. Das Dichtelement 7 weist zwei Dichtlippen 10, 10' auf, welche jeweils benachbart zu den Gegensickenflanken angeordnet sind.

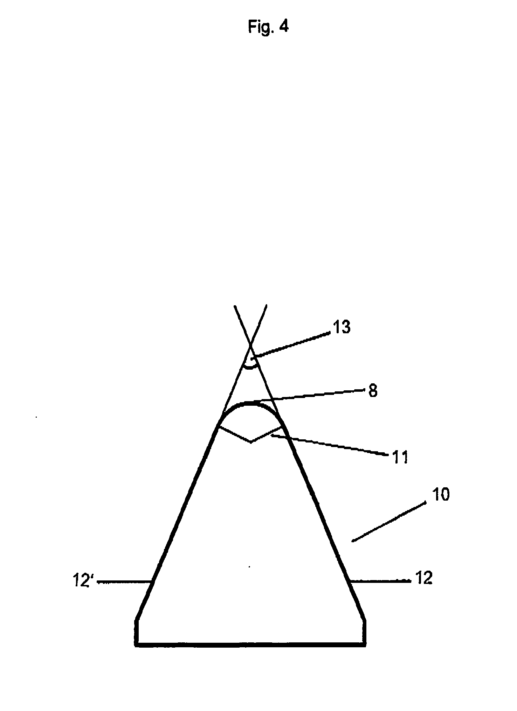

Figur 4 zeigt den Querschnitt einer Dichtlippe 10 mit dem Scheitelpunkt 8, zwei Flanken 12, 12'. Dem Scheitelpunkt 8 ist der Krümmungsradius 11 zugeordnet. Den Flanken 12, 12' ist der Öffnungswinkel 13 zugeordnet. Dieser entspricht dem Winkel, der durch die Verlängerung der beiden Flanken 12, 12' eingeschlossen wird.

## Patentansprüche

1. Dichtungsanordnung (1), insbesondere für einen Brennstoffzellen-und/oder Elektrolyseurstack, umfassend eine Platte (2), die mindestens eine stufenförmige Sicke (3) aufweist, wobei die Sicke (3) mindestens eine innerhalb der Sicke (3) liegende Gegensicke (4) mit einem Gegensickengrund (5) und mindestens einer Gegensickenflanke (6) aufweist, wobei auf dem Gegensickengrund (5) zumindest ein profiliertes Dichtelement (7) mit mindestens einer Dichtlippe (10) so positioniert ist, dass die Projektion des Scheitelpunktes (8) der Dichtlippe (10), senkrecht auf den Gegensickengrund (5) nicht auf oder nicht unmittelbar benachbart zu der Mitte (9) des Gegensickengrunds (5) liegt, **dadurch gekennzeichnet, dass** die Dichtlippe (10) im Scheitelpunkt (8) einen Krümmungsradius (11) im unverpressten Zustand von weniger als 1 mm, vorzugsweise von 0,05 mm bis 0,5 mm, noch vorzugsweise 0,1 bis 0,5 mm , insbesondere von 0,15 mm bis 0,4 mm aufweist.

2. Dichtungsanordnung (1) nach Anspruch 1, **dadurch gekennzeichnet, dass** das profilierte Dichtelement (7) verliersicher auf dem Gegensickengrund (5) angeordnet ist.

3. Dichtungsanordnung (1) nach einem der vorherigen Ansprüche,
**dadurch gekennzeichnet, dass** die Verliersicherheit des Dichtelements (7) dadurch erzielt wird, dass die Herstellung und Positionierung des Dichtelements (7) in einem Schritt durchgeführt wird.

4. Dichtungsanordnung (1) nach einem der vorherigen Ansprüche,
**dadurch gekennzeichnet, dass** das Dichtelement (7) eine Dichtlippe (10) aufweist, welche benachbart zur Gegensickenflanke (6) angeordnet ist.

5. Dichtungsanordnung (1) nach einem der vorherigen Ansprüche, **dadurch gekennzeichnet, dass** das Dichtelement (7) zwei Dichtlippen (10, 10') aufweist, von denen mindestens eine, vorzugsweise beide benachbart zu den Gegensickenflanken (6, 6') angeordnet sind.

6. Dichtungsanordnung (1) nach einem der vorherigen Ansprüche,
**dadurch gekennzeichnet, dass** die Platte (2) und die Sicke (3) und/oder die Sicke (3) und Gegensicke (4) einstückig ausgebildet sind.

7. Dichtungsanordnung (1) nach einem der vorherigen Ansprüche,
**dadurch gekennzeichnet, dass** die Sicke (3) als elastische Struktur ausgestaltet ist

8. Dichtungsanordnung (1) nach einem der vorherigen Ansprüche,
**dadurch gekennzeichnet, dass** die Kennlinie der als elastische Struktur ausgestalteten Sicke (3) auf die Kennlinie der Gesamtverpressung des Stacks dahingehend abgestimmt ist, dass die Deformation der Sicke (3) unterhalb 25% liegt, vorzugsweise zwischen 15-22%.

9. Dichtungsanordnung (1) nach einem der vorherigen Ansprüche,
**dadurch gekennzeichnet, dass** das Dichtelement (7) ein elastomeres Material, insbesondere Silikon, FKM, EPDM, PIB, TPE und /oder Mischungen hieraus enthält.

10. Dichtungsanordnung (1) nach einem der vorherigen Ansprüche,
**dadurch gekennzeichnet, dass** die Platte (2) und/oder die Sicke (3) aus Stahl oder Metallen wie Nickel, Titan, Aluminium und/oder Legierungen hiervon besteht.

11. Dichtungsanordnung (1) nach einem der vorherigen Ansprüche,
**dadurch gekennzeichnet, dass** die Platte (2) als Bipolarplatte ausgebildet ist.

12. Dichtungsanordnung (1) nach einem der vorherigen Ansprüche,
**dadurch gekennzeichnet, dass** das Dichtelement (7) als Formteil, insbesondere als Spritzgußteil, ausgeführt ist

13. Dichtungsanordnung (1) nach einem der vorherigen Ansprüche,
**dadurch gekennzeichnet, dass** das Dichtelement (7) bei einer Verpressung von 30 % eine Reaktionskraft auf die Sicke (3) von weniger als 5 N/mm, vorzugsweise von 0,1 N/mm - 4 N/mm, insbesondere von 0,5 N/mm - 3 N/mm ausübt.

14. Verfahren zur Herstellung einer Dichtungsanordnung (1) nach einem der vorherigen Ansprüche, umfassend folgende Schritte:
- Bereitstellung der folgenden Komponenten:
a) mindestens eine Platte (2), die mindestens eine stufenförmige Sicke (3) aufweist, wobei die Sicke (3) mindestens eine innerhalb der Sicke (3) liegende Gegensicke (4) mit einem Gegensickengrund (5) und mindestens einer Gegensickenflanke (6) aufweist
b) mindestens ein profiliertes Dichtelement (7), das als Dichtlippe (10) ausgeformt ist und im Schettelpunkt (8) einen Krümmungsradius (11) im unverpressten Zustand von weniger als 1 mm, vorzugsweise von 0,05 mm bis 0,5 mm, noch vorzugsweise 0,1 bis 0,5 mm , insbesondere von 0,15 mm bis 0,4 mm aufweist
- Zusammenfügung der vorgenannten Komponenten unter Positionierung des Dichtelements (7) auf der Platte (2), so dass die Projektion des Scheftelpunktes (8) des Dichtelements (7), senkrecht auf den Gegensickengrund (5) nicht auf oder nicht unmittelbar benachbart zu der Mitte (9) des Gegensickengrunds (5) liegt.

15. Verfahren nach Anspruch 14, **dadurch gekennzeichnet, dass** die
Bereitstellung des Dichtelements (7) und das Zusammenfügen mit der Platte (2) simultan, vorzugsweise mittels eines Form gebenden Verfahrens, insbesondere Spritzgießen oder Compression Moulding erfolgt.
